(19) **Europäisches Patentamt**

**European Patent Office**

**Office européen des brevets**

(11) Veröffentlichungsnummer: **0 214 474 B1**

(12) **EUROPÄISCHE PATENTSCHRIFT**

(45) Veröffentlichungstag der Patentschrift: **11.04.90**

(51) Int. Cl.⁴: **H04L 12/42, H04L 1/16**

(21) Anmeldenummer: **86110940.3**

(22) Anmeldetag: **07.08.86**

(54) **Verfahren und Schaltungsanordnung zum Übertragen von Datensignalen zwischen über ein Ringleitungssystem miteinander verbundenen Steuereinrichtungen.**

(30) Priorität: **11.09.85 DE 3532469**

(43) Veröffentlichungstag der Anmeldung:
**18.03.87 Patentblatt 87/12**

(45) Bekanntmachung des Hinweises auf die Patenterteilung:
**11.04.90 Patentblatt 90/15**

(84) Benannte Vertragsstaaten:
**AT BE CH DE FR GB IT LI LU NL SE**

(56) Entgegenhaltungen:
DE-A- 3 136 524

**PROCEEDINGS OF THE SIXTH INTERNATIONAL CONFERENCE ON COMPUTER COMMUNICATION,** London, GB, 7.-10. September 1982, Seiten 496-501, North-Holland Publishing Co., Amsterdam, NL; K. YAGYU et al.: "High throughput optical fiber loop network with effective detection mechanism of lost or duplicated token" 000

(73) Patentinhaber: **Siemens Aktiengesellschaft, Wittelsbacherplatz 2, D-8000 München 2(DE)**

(72) Erfinder: **Michels-Krohn, Karl-Heinz, Ing. grad., Galileistrasse 2, D-8033 Martinsried(DE)**
Erfinder: **Untergruber, Josef, Ing. grad., Heuberweg 17, D-8201 Nussdorf/Inn(DE)**

ACTORUM AG

## Beschreibung

Die Erfindung betrifft ein Verfahren und eine Schaltungsanordnung zum Übertragen von Datensignalen zwischen über ein taktgesteuertes, richtungsabhängig betriebenes Ringleitungssystem miteinander verbundenen Steuereinrichtungen, die insbesondere durch Steuereinrichtungen eines Datenvermittlungssystems gebildet sind, wobei über das Ringleitungssystem von Steuereinrichtung zu Steuereinrichtung ein diese jeweils in einen Sendeberechtigungszustand steuerndes Sendeberechtigungssignal übertragen wird, vor dessen Weitergabe von der jeweiligen Steuereinrichtung von dieser zu sendende Datensignale zusammen mit einer eine gewünschte Steuereinrichtung bezeichnenden Empfängeradresse an das Ringleitungssystem abgegeben werden, und wobei von einer Steuereinrichtung, die durch die zusammen mit den Datensignalen übertragene Empfängeradresse bezeichnet ist, diese Datensignale zur weiteren Bearbeitung übernommen werden und ein über das Ringleitungssystem weiterzuleitendes Quittungssignal abgegeben wird, welches für diejenige in einem Quittungsempfangszustand sich befindende Steuereinrichtung vorgesehen ist, von der die Datensignale abgegeben worden sind.

Ein Verfahren der gerade genannten Art ist bereits bekannt (DE-OS 31 36 586). Bei diesem bekannten Verfahren verbleibt die Steuereinrichtung, von der Datensignale abgegeben worden sind, in dem genannten Quittungsempfangszustand bis zum Empfang eines von der als Empfänger ausgewählten Steuereinrichtung auf die Aufnahme der Datensignale hin erzeugten Quittungssignals. Es kann nun auch der Fall eintreten, daß ein Quittungssignal ausbleibt, sei es nun aufgrund einer fehlerhaften Arbeitsweise des Ringleitungssystems oder einer sporadischen Verfälschung der in dem Quittungssignal enthaltenen Informationen, so daß die Steuereinrichtung, von der zuvor die Datensignale abgegeben worden sind, in dem Quittungsempfangszustand verbleibt. Damit ist diese Steuereinrichtung für die weitere Abgabe von Datensignalen gesperrt. Um dieses auszuschließen, ist es nun möglich, den Quittungsempfangszustand der Steuereinrichtungen zeitlich zu begrenzen (PROCEEDINGS OF THE SIXTH INTERNATIONAL CONFERENCE ON COMPUTER COMMUNICATION, London, GB, 7.–10. September 1982, Seiten 496–501, North-Holland Publishing Co., Amsterdam, NL; K YAGYU et al.: "High throughput optical fiber loop network with effective detection mechanism of lost or duplicated token". Hierfür sind in den Steuereinrichtungen gesonderte Überwachungsschaltungen erforderlich.

Es ist nun Aufgabe der vorliegenden Erfindung, einen Weg zu zeigen, wie bei einem Verfahren und einer Schaltungsanordnung der eingangs genannten Art ein von einer Steuereinrichtung eingenommener Quittungsempfangszustand mit einem geringen Steuerungsaufwand zeitlich überwacht werden kann.

Gelöst wird die vorstehend aufgezeigte Aufgabe bei einem Verfahren der eingangs genannten Art erfindungsgemäß dadurch, daß die maximale Zeitspanne, während der eine Steuereinrichtung nach der Abgabe von Datensignalen sich im Quittungsempfangszustand befindet, durch den Zeitpunkt des erneuten Eintreffens des Sendeberechtigungssignals bei der betreffenden Steuereinrichtung festgelegt wird, daß bei Eintreffen des für die betreffende Steuereinrichtung in Frage kommenden Quittungssignals innerhalb der genannten maximalen Zeitspanne von der betreffenden Steuereinrichtung ein eine erneute Abgabe von Datensignalen ermöglichender Zustand eingenommen wird und daß bei Ablauf der maximalen Zeitspanne vor Eintreffen des für die betreffende Steuereinrichtung in Frage kommenden Quittungssignals diese Steuereinrichtung in einen Fehlermelde- und/oder Fehlerbehandlungszustand überführt wird.

Die Erfindung bringt den Vorteil mit sich, daß für die zeitliche Überwachung des von einer Steuereinrichtung eingenommenen Quittungsempfangszustands in dieser keine gesonderten Zeitgebereinrichtungen erforderlich sind, sondern daß hier für die Ermittlung der Dauer des Bestehens eines Quittungsempfangszustandes das Auftreten des über das Ringleitungssystem übertragenen Sendeberechtigungssignals ausgewertet wird. Ein weiterer Vorteil der Erfindung liegt darin, daß eine im Quittungsempfangszustand sich befindende Steuereinrichtung bei Ausbleiben eines erwarteten Quittungssignals innerhalb der maximalen vorgegebenen Zeitspanne zunächst in einen Fehlermelde- und/oder Fehlerbehandlungszustand überführt wird. Auf diese Weise ist es möglich, in kürzester Zeit Maßnahmen für die Fehlererkennung innerhalb der betreffenden Steuereinrichtung oder innerhalb des gesamten Ringleitungssystems einzuleiten.

Zur Durchführung des Verfahrens gemäß der Erfindung in einer Schaltungsanordnung mit über ein taktgesteuertes, richtungsabhängig betriebenes Ringleitungssystem miteinander verbundenen Steuereinrichtungen, welche jeweils als Sendeeinrichtungen nach Empfang eines Sendeberechtigungssignals ggfs. zu übertragende Datensignale an das Ringleitungssystem abgeben und welche jeweils als Empfangseinrichtungen für sie bestimmte, über das Ringleitungssystem übertragene Datensignale aufnehmen und ein diesen entsprechendes Quittungssignal für die in Frage kommende Sendeeinrichtung an das Ringleitungssystem abgeben, ist es vorteilhaft, die Schaltungsanordnung derart auszubilden, daß jede der Steuereinrichtungen eine Sendeablaufsteuerung aufweist, welche die zugehörige Steuereinrichtung nach Abgabe von Datensignalen zunächst in den Quittungsempfangszustand und aus diesem auf ein erneutes Eintreffen eines Sendeberechtigungssignals hin vor dem Eintreffen des erwarteten Quittungssignals in ein Fehlermelde- und/oder Fehlerbehandlungszustand überführt und daß in jeder der Steuereinrichtungen ein Quittungssignalempfänger vorgesehen ist, welcher auf das Eintreffen eines Quittungssignals hin ein Quittungsbestätigungssignal an die zugehörige Sendeablaufsteuerung abgibt, aufgrund dessen diese Sendeablaufsteuerung die zugehörige, in einem Quittungsempfangszustand sich befindende Steuereinrichtung in einen eine erneute Abgabe von Datensignalen ermöglichenden Zustand überführt. Der Vorteil dieser Schaltungsanordnung besteht darin, daß in den Steuereinrichtungen für die Überwachung des Auftretens von Sendeberechtigungssignalen und Quittungssignalen jeweils gesonderte Einrichtungen, nämlich eine Sendeablaufsteuerung und ein Quittungssignalempfänger, vorgesehen sind. Damit wird der Steuerungsaufwand in in einem Quittungsempfangszustand sich befindenden Steuereinrichtungen gering gehalten.

Der Steuerungsaufwand in den einzelnen Steuereinrichtungen kann insbesondere dadurch gering gehalten werden, daß die den Steuereinrichtungen jeweils zugehörige Sendeablaufsteuerung eine mit einer Mehrzahl von Unterbrechungs- Steuereingängen versehene Mikroprozessoranordnung aufweist,
daß mit einem ersten der Unterbrechungs- Steuereingänge eine Anordnung für den Empfang von Sendeberechtigungssignalen verbunden ist, welche bei Auftreten eines Sendeberechtigungssignals ein diesem entsprechendes Steuersignal an den betreffenden Unterbrechungs- Steuereingang abgibt, und daß an einem weiteren Unterbrechungs-Steuereingang der bereits genannte Quittungssignalempfänger für die Abgabe eines Quittungsbestätigungssignals angeschlossen ist.

Der Quittungssignalempfänger kann mit einem relativ geringen schaltungstechnischen Aufwand dann realisiert werden, wenn als Quittungssignalempfänger eine Decodiereinrichtung und ein mit der Mikropprozessoranordnung verbundenes Register vorgesehen ist, welches bei Auftreten eines für die jeweilige Steuereinrichtung bestimmten Quittungssignals dieses für eine Auswertung durch die Mikroprozessoranordnung aufnimmt und auf diese Aufnahme hin ein Quittungsbestätigungssignal an einem Steuerausgang abgibt.

Im folgenden wird die Erfindung anhand von Zeichnungen beispielsweise näher erläutert.

FIG 1 zeigt in einem Blockschaltbild ein aus einem Ringleitungssystem gebildetes Datenvermittlungssystem, bei dem die Erfindung angewandt ist,
FIG 2 zeigt in einem Blockschaltbild den Aufbau einer der in FIG 1 lediglich schematisch dargestellten Schnittstellenschaltungen und den Aufbau einer der Vermittlungseinheiten bzw. Leitungsanschlußeinheiten,
FIG 3 zeigt den Aufbau einer in den Schnittstellenschaltungen jeweils vorhandenen Sendepuffer-Anordnung,
FIG 4 zeigt den Aufbau einer Einrichtung für den Empfang eines Sendeberechtigungssignals und
FIG 5 zeigt den Aufbau einer Sendepuffer-Steuereinrichtung und
FIG 6 zeigt den Aufbau einer in den Schnittstellenschaltungen jeweils vorhandenen Empfangspuffer-Anordnung.

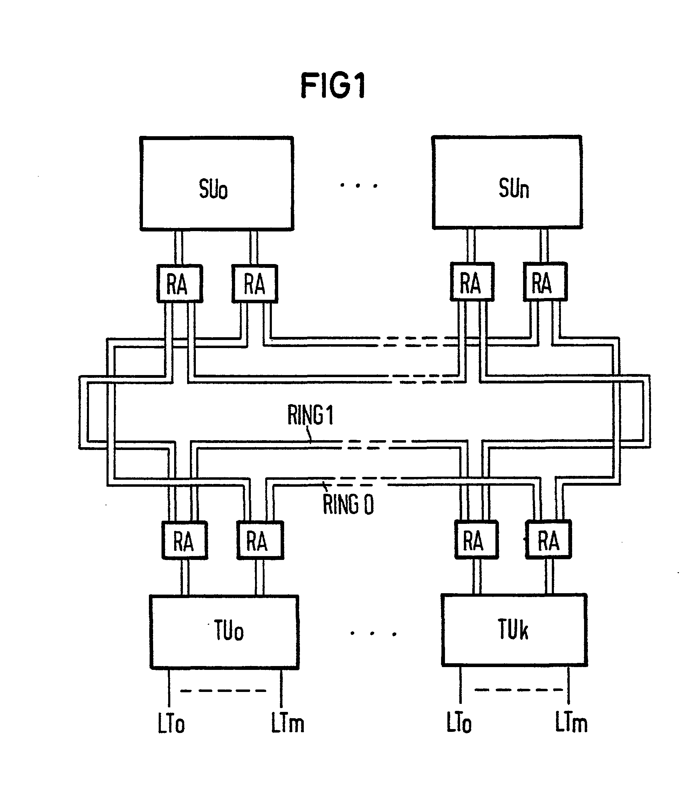

In FIG 1 ist ein Datenvermittlungssystem mit einer Mehrzahl von Vermittlungseinheiten SU0 bis SUn dargestellt. Diese Vermittlungseinheiten führen nach dem Lastteilungsprinzip die für die Übertragung von Datensignalen erforderlichen Vermittlungsfunktionen aus. Die Vermittlungseinheiten sind dafür gemeinsam an ein Ringleitungssystem angeschlossen. Ein solches Ringleitungssystem kann aus einer einzigen geschlossenen Ringleitungsanordnung bestehen. Ein solches Ringleitungssystem kann jedoch auch beispielsweise, wie in FIG 1 dargestellt, aus zwei parallel verlaufenden, voneinander unabhängigen Ringleitungsanordnungen RING0 und RING1 aufgebaut sein. Durch eine solche Redundanz ist es beispielsweise bei Ausfall einer der Ringleitungsanordnungen möglich, die Übertragung von Datensignalen auf der jeweils anderen Ringleitungsanordnung auszuführen.

Der Anschluß der genannten Vermittlungseinheiten SU0 bis SUn an die beiden Ringleitungsanordnungen erfolgt jeweils über eine für jede der Ringleitungsanordnungen gesonderte Schnittstellenschaltung RA, auf die im folgenden noch näher eingegangen wird.

Mit den genannten Ringleitungsanordnungen RING0 und RING1, ist außerdem eine Mehrzahl von Leitungsanschlußeinheiten TU0 bis TUk jeweils wieder über eine für jede der Ringleitungsanordnungen gesonderte Schnittstellenschaltung RA verbunden. Diese Leitungsanschlußeinheiten dienen zusammen mit den zugehörigen Schnittstellenschaltungen für die Datensignalübertragung zwischen den Vermittlungseinheiten und mit Teilnehmereinrichtungen verbundenen Übertragungsleitungen, die an die Leitungsanschlußeinheiten angeschlossen sind. Jede der Leitungsanschlußeinheiten weist für einen solchen Anschluß von Übertragungsleitungen eine Mehrzahl von Leitungsanschlüssen LT0 bis LTm auf.

Die aus den genannten Vermittlungseinheiten bzw. den Leitungsanschlußeinheiten und den zugehörigen Schnittstellenschaltungen gebildeten Schaltungseinheiten werden im folgenden auch als Steuereinrichtungen bezeichnet. Für den Fall, daß das Ringleitungssystem lediglich aus einer einzigen Ringleitungsanordnung besteht, gehört zu einer Steuereinrichtung lediglich eine einzige Schnittstellenschaltung.

Innerhalb des in FIG 1 dargestellten Vermittlungssystems, d. h. zwischen den Vermittlungseinheiten und den Leitungsanschlußeinheiten, erfolgt die Übertragung von Datensignalen in Form von Datensignalblöcken, welche jeweils als Datensignale im Zuge des Aufbaus einer Verbindung Signalisierungsinformationen und bei einer eingerichteten Verbindung die zwischen den in Frage kommenden Teilnehmereinrichtungen zu übertragenden Nachrichtensignale aufweisen. Dabei enthält jeder zu übertragende Datensignalblock neben den eigentlichen Datensignalen, die jeweils aus einer Mehrzahl von Bits, z. B. 8 Bits, gebildet sind, mindestens eine eine als Empfänger ausgewählte Steuereinrichtung bezeichnende Empfängeradresse, den Beginn und das Ende eines Datensignalblockes bezeichnende Anfangsund Endekennungen, eine die jeweilige Steuereinrichtung als Sender bezeichnende Senderadresse und ein vorbereitetes Quittungssignal.

Ein derartig aufgebauter Datensignalblock kann dabei nur dann an eine der Ringleitungsanordnungen abgegeben werden, wenn zuvor von dieser Steuereinrichtung ein von Steuereinrichtung zu Steuereinrichtung übertragenes, diese jeweils in einen Sendezustand steuerndes Sendeberechtigungssignal empfangen wurde.

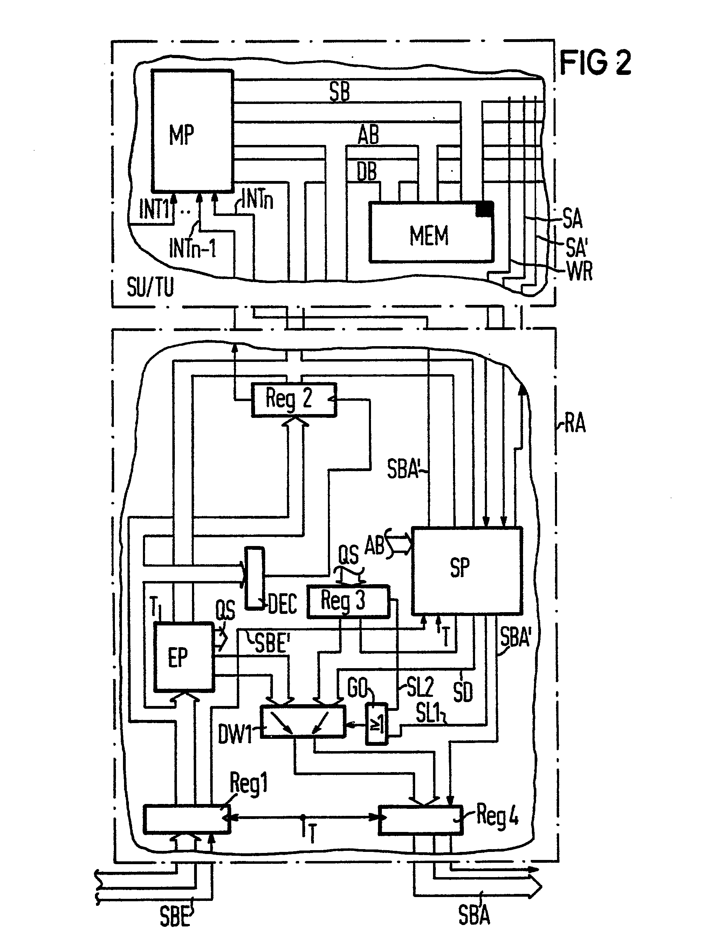

In FIG 2 ist der Aufbau einer Steuereinrichtung detaillierter dargestellt. Wie bereits oben erwähnt, besteht eine solche Steuereinrichtung entweder aus einer Vermittlungseinheit oder aus einer Leitungsanschlußeinheit, in FIG 2 durch die Bezeichnung SU/TU angedeutet, und einer der Anzahl der Ringleitungsanordnungen entsprechenden Anzahl von Schnittstellenschaltungen. Dabei ist in FIG 2 lediglich eine dieser Schnittstellenschaltungen gezeigt, da sämtliche mit den Vermittlungseinheiten bzw. Leitungsanschlußeinheiten verbundenen Schnittstellenschaltungen intern den gleichen Aufbau aufweisen.

Die in FIG 2 mit SU/TU bezeichnete, ausschnittweise dargestellte Einheit (Vermittlungseinheit oder Leitungsanschlußeinheit) weist eine sowohl Sendeals auch Empfangsvorgänge steuernde Mikroprozessoranordnung auf. Von dieser Mikroprozessoranordnung sind dargestellt ein Mikroprozessor MP und eine über ein Busleitungssystem mit diesem verbundene, Festwertspeicher (Programmspeicher) und Schreib-/Lese-Speicher umfassende Speicheranordnung MEM. Das Busleitungssystem besteht dabei aus einem Datenbus DB, einem Adressbus AB und einem Steuerbus SB. Über den Datenbus und den Addressbus sowie über die mit WR und SA bezeichneten Leitungen des Steuerbusses steht auch die Schnittstellenschaltung RA mit dem Mikroprozessor MP in Verbindung. Weiterhin führen zwei Steuerleitungen der Schnittstellenschaltung zu Unterbrechungseingängen INTn-1 und INTn des Mikroprozessors MP hin.

Die Schnittstellenschaltung RA läßt sich in zwei Schaltungsteile aufteilen, nämlich in einen Sendeteil für die Abgabe von Datensignalblöcken an die zugehörige Ringleitungsanordnung und in einen Empfangsteil für die Übernahme von Datensignalblöcken von der zugehörigen Ringleitungsanordnung. Im folgenden wird zunächst auf den Empfangsteil eingegangen.

An der Schnittstelle zur zugehörigen Ringleitungsanordnung ist ein Empfangsregister Reg1 vorgesehen, in welches in paralleler Form über die Ringleitungsanordnung übertragene Signale unter Steuerung eines Taktimpulse T abgebenden, nicht dargestellten Taktgenerators übernommen werden. Die Taktimpulsfolge ist im übrigen auf die Übertragungsgeschwindigkeit auf der Ringleitungsanordnung abgestimmt. Bei den gerade genannten Signalen handelt es sich jeweils um eine vorgegebene Anzahl von Datensignalen und um ein Sendeberechtigungssignal, welches auf einer gesonderten, mit SBE bezeichneten Leitung übertragen wird. Dieses Sendeberechtigungssignal kann dabei durch einen vorgegebenen, für eine bestimmte Zeitdauer auftretenden Zustand eines Binärsignals gebildet sein.

Ausgangsseitig ist das Eingangsregister Reg1 mit seinen die Datensignale führenden Ausgängen einerseits mit einer Empfangspuffer-Anordnung EP und andererseits mit einem Quittungssignalempfänger verbunden. Dieser ist aus einem Adressendecodierer DEC und einem Quittungsregister Reg2 gebildet. Beide stehen dabei eingangsseitig mit den gerade genannten Ausgängen des Eingangsregisters Reg1 in Verbindung. Der Ausgang des Adressendecodierers ist an einen Takteingang des Quittungsregisters angeschlossen. Dieses Quittungsregister wiederum weist Datensignalausgänge auf, die mit dem bereits genannten Datenbus DB verbunden sind. Darüber hinaus führt eine Steuerleitung des Quittungsregisters Reg2 zu dem Unterbrechungseingang INTn-1 des Mikroprozessors MP hin.

Die genannte Empfangspuffer-Anordnung EP dient, wie im folgenden noch näher erläutert werden wird, für die Aufnahme von für die jeweilige Steuereinrichtung bestimmten Datensignalblöcken und für die Weiterleitung von für andere, an der Ringleitungsanordnung angeschlossene Steuereinrichtungen bestimmten Datensignalblöcken. Ausgangsseitig ist diese Empfangspuffer-Anordnung einerseits mit dem bereits genannten Datenbus DB und andererseits mit ersten Eingängen einer Datenweiche DW1 sowie über eine Leitungsanordnung QS mit Eingängen eines Registers Reg3 verbunden.

Der Sendeteil der Schnittstellenschaltung RA weist eine Sendepuffer-Anordnung SP auf, welche von der bereits genannten Mikroprozessoranordnung über den Datenbus DB, den Adressbus AB und über die Leitungen WR und SA des Steuerbusses SB Signale zugeführt erhält. Weiterhin ist ein Eingang der Sendepuffer-Anordnung mit dem das Sendeberechtigungssignal führenden Ausgang des Eingangsregisters Reg1 über eine mit SBE' bezeichnete Leitung verbunden. Schließlich erhält die Sendepuffer-Anordnung SP an einem weiteren Eingang die Taktsignale T zugeführt.

Mit Datensignalausgängen ist die Sendepuffer-Anordnung SP über eine Leitungsanordnung SD mit weiteren Eingängen der bereits erwähnten Datenweiche DW1 verbunden. Diese Datenweiche wird unter anderem durch ein auf einer mit SL1 bezeichneten Leitung auftretendes Steuersignal von der Sendepuffer-Anordnung her gesteuert. Die Datenweiche ist dafür mit einem Steuereingang über ein ODER-Glied GO mit der Leitung SL1 verbunden.

An die zuletzt genannten Eingänge der Datenweiche DW1 ist außerdem noch das eingangsseitig mit der Leitungsanordnung QS verbundene Register Reg3 mit seinen Datensignalausgängen angeschlossen. Ein Steuerausgang dieses Registers ist über eine mit SL2 bezeichnete Leitung und das ODER-Glied GO mit dem Steuereingang der Datenweiche DW1 verbunden.

Ausgangsseitig ist die Datenweiche DW1 mit Datensignaleingängen eines an der Schnittstelle zu der zugehörigen Ringleitungsanordnung vorgesehenen, durch die Taktimpulse T gesteuerten Ausgangsregisters Reg4 verbunden. Dieses Register ist mit einem weiteren Eingang über eine mit SBA' bezeichnete Leitung an einen ein weiterzuleitendes Sendeberechtigungssignal führenden Ausgang der Sendepuffer-Anordnung SP angeschlossen. Ausgangsseitig ist das Ausgangsregister Reg4 mit der zugehörigen Ringleitungsanordnung verbunden. Die Leitung SBA' ist im übrigen auch mit dem Unterbrechungseingang INTn des Mikroprozessors MP verbunden. Über eine leitung SA' steht schließlich die Sendepuffer-Anordnung noch mit dem Steuerbus SB in Verbindung.

Bezüglich der Empfangspuffer-Anordnung EP, und des Quittungsregisters Reg2 sei noch darauf hingewiesen, daß diese jeweils für eine Ansteuerung von dem Mikroprozessor MP her außer mit dem Datenbus DB auch noch mit dem Adressbus AB und dem Steuerbus SB in Verbindung stehen. Die jeweiligen Verbindungen sind jedoch zur Vereingachung der FIG 2 nicht dargestellt.

Im folgenden wird nun zunächst das Zusammenwirken der in FIG 2 dargestellten Schaltungsteile bei der Übertragung von Datensignalen erläutert, ehe auf den Aufbau der Empfangspuffer-Anordnung EP und der Sendepuffer-Anordnung SP näher eingegangen wird.

Es wird zunächst davon ausgegangen, daß von der in FIG 2 dargestellten Steuereinrichtung Datensignale zu einer anderen Steuereinrichtung zu übertragen sind. Hierzu stellt zunächst die Mikroprozessoranordnung die jeweils aus einer vorgegebenen Anzahl von Bits bestehenden Datensignale zu mindestens einem Datensignalblock zusammen, wobei den eigentlichen Datensignalen eine den Anfang eines Datensignalblockes kennzeichnende Anfangskennung und eine die als Empfänger ausgewählte Steuereinrichtung bezeichnende Empfängeradresse vorangestellt werden. Ein auf diese Weise zusammengestellter Datensignalblock wird anschließend, gesteuert durch über die Leitung WR übertragene Schreibimpulse, wortweise in die Sendepuffer-Anordnung SP übertragen. Unter einem Wort soll dabei eine vorgegebene Anzahl von Bits verstanden werden, die gleichzeitig in Form eines parallelen Zeichens zu der Sendepuffer-Anordnung hin übertragen wird. Beispielsweise kann ein Wort aus 16 Bits bestehen, also aus zwei Datensignalen, wenn jedes Datensignal aus 8 Bits besteht.

Nach der wortweisen Übertragung eines Datensignalblockes gibt dann die Mikroprozessoranordnung über die Leitung SA ein Sendeanforderungssignal an die Sendepuffer-Anordnung SP ab. Dieses bleibt jedoch in der Sendepuffer-Anordnung zunächst bis zum Auftreten eines Sendeberechtigungssignals, welches über das Eingangsregister Reg1 und die Leitung SBE' zu der Sendepuffer-Anordnung hin gelangt, unberücksichtigt. Nach dem Auftreten eines Sendeberechtigungssignals wird jedoch der in der Sendepuffer-Anordnung gerade gespeicherte Datensignalblock dann wortweise über das Ausgangsregister Reg4 an die zugehörige Ringleitungsanordnung abgegeben. Dabei werden dem Datensignalblock noch eine das Ende eines Datenblockes anzeigende Endekennung und eine Senderadresse, die die den Datensignalblock sendende Steuereinrichtung bezeichnet, beigefügt sowie ein für den Empfänger vorbereitetes Quittungssignal angefügt. Im Anschluß daran leitet dann die Sendepuffer-Anordnung SP das zuvor empfangene Sendeberechtigungssignal über die Leitung SBA' an das Ausgangsregister Reg4 weiter, welches dieses Sendeberechtigungssignal an die Ringleitungsanordnung abgibt.

Nach der Abgabe des Sendeberechtigungssignals, welche dem Mikroprozessor MP durch ein Signal auf der Leitung SA' angezeigt wird, geht dann die betreffende Steuereinrichtung zunächst in einen Quittungsempfangszustand, in welchem lediglich Empfangsvorgänge abgewickelt werden können und in welchem der Unterbrechungseingang INTn des Mikroprozessors freigegeben ist.

Der Quittungsempfangszustand bleibt im Normalfall bis zum Eintreffen eines Quittungssignals, welches auf den Empfang des gerade übertragenen Datensignalblockes hin von der als Empfänger in Frage kommenden Steuereinrichtung abgegeben wird, erhalten. Bei dem Quittungssignal handelt es sich dabei um das bereits erwähnte, in dem Datensignalblock übertragene vorbereitete Quittungssignal, das in der als Empfänger in Frage kommenden Steuereinrichtung modifiziert wird. Durch dieses Modifizieren werden dem Sender den Empfang des übertragenen Datensignalblockes betreffende Informationen zugeführt. Beispielsweise kann durch ein in bestimmter Weise modifiziertes Quittungssignal der fehlerfreie Übertragung eines Datensignalblockes angezeigt werden.

Beigefügt werden einem modifizierten Quittungssignal die Adresse des Senders des gerade empfangenen Datensignalblockes und die dem Datensignalblock zugehörige Endekennung. Die Adresse und die Endekennung werden dabei dem empfangenen Datensignalblock entnommen.

Das Auftreten eines Quittungssignals wird nun mit Hilfe des bereits erwähnten Quittungssignalempfängers überwacht. Der diesem zugehörige Adressendecodierer DEC vergleicht hierzu ständig die am Ausgang des Eingangsregisters Reg1 (FIG 2) auftretenden Signale mit einem aus der der betreffenden Steuereinrichtung zugewiesenen Adresse und der vereinbarten Endekennung bestehenden Signal. Stellt dabei der Adressendecodierer eine Übereinstimmung fest, so gibt er an seinem Ausgang ein Steuersignal ab. Mit dem Auftreten dieses Steuersignals wird dann das im Anschluß an die Adresse und die Endekennung übertragene Quittungssignal in das Quittungsregister Reg2 übernommen.

Auf die Aufnahme des Quittungssignals hin gibt das Quittungsregister über seinen Steuerausgang ein Quittungsbestätigungssignal an den Mikroprozessor MP ab. Dieser übernimmt daraufhin das gerade in dem Quittungsregister gespeicherte Quittungssignal für eine anschließende Auswertung. Im Zuge dieser Auswertung überführt der Mikroprozessor dann die zugehörige Steuereinrichtung aus dem Quittungsempfangszustand in einen Zustand, in welchem eine erneute Abgabe eines Datensignalblockes möglich ist. Von der Auswertung des Quittungssignals hängt es dabei ab, ob ein gegebenenfalls weiterer, für eine Übertragung anstehender Datensignalblock übertragen wird oder ob zunächst bei einem erkannten Übertragungsfehler Maßnahmen zur Fehlerbehandlung, wie z. B. Maßnahmen zur erneuten Übertragung des zuvor abgegebenen Datensignalblockes, eingeleitet werden. Im übrigen ist in diesem Zustand der Unterbrechungseingang INTn gesperrt.

Darüber hinaus wird in den Steuereinrichtungen ständig das Eintreffen des Sendeberechtigungssignals überwacht, und zwar in der zugehörigen Sendepuffer-Anordnung SP. Diese gibt auf das Auftreten des Sendeberechtigungssignals hin ein Steuersignal an den Unterbrechungseingang INTn des Mikroprozessors MP ab. Ist bis zur Abgabe dieses Steuersignals in einer in einem Quittungsempfangszustand sich gerade befindenden Steuereinrichtung das von dieser erwartete Quittungssignal nicht eingetroffen, so überführt der Mikroprozessor MP die zugehörige Steuereinrichtung in einen Fehlermelde- und/oder Fehlerbehandlungszustand. In diesem Zustand werden gegebenenfalls neben einer Fehlermeldung Maßnahmen zur Fehlerbehandlung eingeleitet. Diese laufen darauf hinaus, daß beispielsweise sämtliche in die Übertragung des nicht quittierten Datensignalblockes einbezogenen Einrichtungen des Vermittlungssystems, d. h. die beiden in Frage kommenden Steuereinrichtungen und die für die Übertragung benutzte Ringleitungsanordnung, schrittweise überprüft werden. Ergibt diese Überprüfung dabei beispielsweise, daß die betreffende Ringleitungsanordnung oder die mit ihr verbundenen Schnittstellenschaltungen RA nicht fehlerfrei arbeiten, so kann die Fehlerbehandlung darin bestehen, daß für die Übertragung von Datensignalblöcken auf die bisher nicht benutzte Ringleitungsanordnung übergewechselt wird. Arbeiten dagegen zentrale Teile der an der Übertragung beteiligten Steuereinrichtungen nicht fehlerfrei, so kann die Fehlerbehandlung darauf hinauslaufen, daß die jeweilige Steuereinrichtung von einer weiteren Datensignalübertragung ausgeschlossen wird.

Im folgenden werden nun die bei Empfang eines Datensignalblockes in einer Steuereinrichtung ablaufenden Steuerungsvorgänge erläutert. Wie bereits oben erwähnt, ist für die Aufnahme von Datensignalblöcken die Empfangspuffer-Anordnung EP vorgesehen. Diese vergleicht bei Auftreten einer den Anfang eines Datensignalblockes bezeichnenden Anfangskennung die zu Beginn des Datensignalblockes übertragene Empfängeradresse mit einer der betreffenden Steuereinrichtung zugewiesenen Adresse. Bei einer Übereinstimmung der miteinander verglichenen Adressen werden dann die zu dem Datensignalblock gehörenden Signale bis zum Auftreten einer das Ende des Datensignalblockes anzeigenden Endekennung in eine Speicheranordnung übernommen. Dort verbleiben sie zunächst bis zur Übernahme durch die Mikroprozessoranordnung der Einheit SU/TU (FIG 2). Die Übernahme kann dabei beispielsweise auf ein von der Empfangspuffer-Anordnung bei Auftreten der Endekennung abgegebenes Steuersignal hin erfolgen. Das Steuersignal kann dafür dem Mikroprozessor an einem weiteren Unterbrechungseingang, beispielsweise dem Eingang INT1, zugeführt werden.

Vor der Übergabe eines Datensignalblockes erfolgt in der Empfangspuffer-Anordnung EP noch eine Überprüfung hinsichtlich seiner fehlerfreien Übertragung, beispielsweise in Form einer Paritätsprüfung. Dabei modifiziert die Empfangspuffer-Anordnung das in dem Datensignalblock übertragene, vom Sender des Datensignalblockes vorbereitete Quittungssignal entsprechend dem Überprüfungsergebnis und überträgt dieses modifizierte Quittungssignal dann zusammen mit der den Sender des gerade empfangenen Datensignalblockes bezeichnenden Adresse und der Endekennung zu dem Register Reg3 hin. Endekennung und Adresse werden dabei dem empfangenen Datensignalblock entnommen. Das Register Reg3 leitet dann die übernommenen Signale über die Datenweiche DW1 und das Ausgangsregister Reg4 an die Ringleitungsanordnung weiter. Die Datenweiche DW1 wird dazu von dem Register Reg3 her über die Leitung SL2 entsprechend gesteuert.

Stellt dagegen die Empfangspuffer-Anordnung EP bei Auftreten einer Anfangskennung eines Datensignalblockes eine Nichtübereinstimmung der miteinander verglichenen Adressen fest, so leitet diese den Datensignalblock unverändert an die Datenweiche DW1 weiter. Über diese Datenweiche und das nachgeschaltete Ausgangsregister Reg4 gelangt dann der Datensignalblock wieder auf die Ringleitungsanordnung und damit zu der in der Ringleitungsanordnung nachfolgenden Steuereinrichtung.

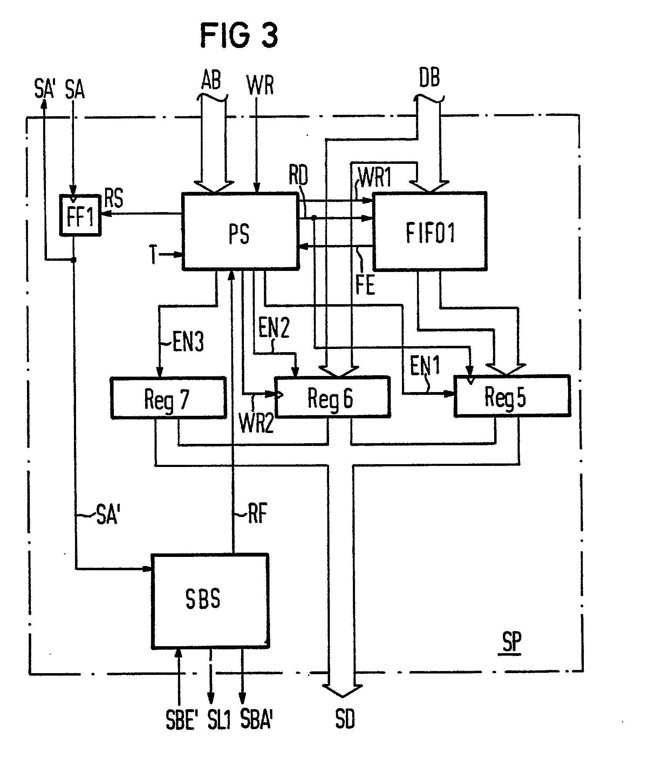

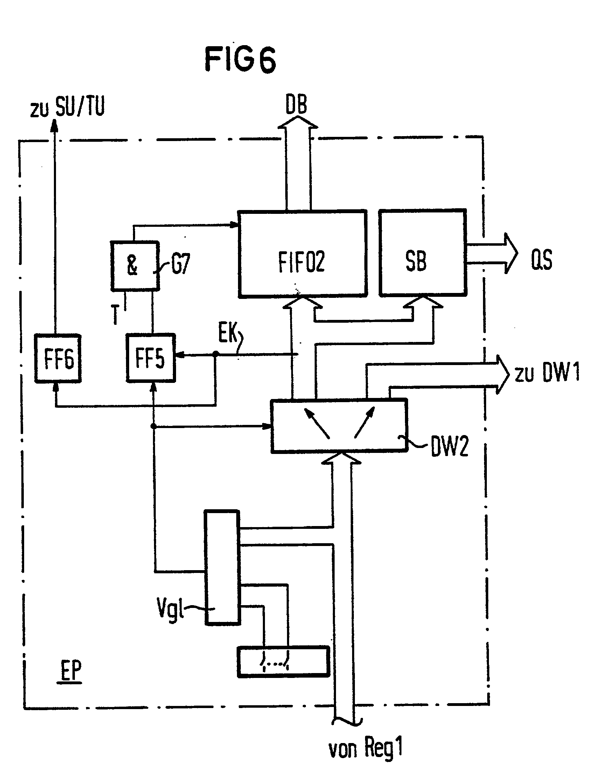

Im folgenden wird nun noch auf den Aufbau der Sendepuffer-Anordnung SP und der Empfangspuffer-Anordnung EP eingegangen. In FIG 3 ist ein Blockschaltbild der Sendepuffer-Anordnung dargestellt. Sie weist u. a. einen mit seinen Datensignaleingängen an den Datenbus DB angeschlossenen Durchlaufspeicher FIFO1 auf. Dieser Durchlaufspeicher, der auch als First-in-first-out-Speicher bezeichnet wird, dient für die bereits erwähnte wortweise Aufnahme eines von der Mikroprozessoranordnung der Einheit SU/TU bereitgestellten Datensignalblockes und für dessen Weiterleitung an die Ringleitungsanordnung auf das Auftreten eines Sendeberechtigungssignals hin. Gesteuert werden die dafür erforderlichen Schreib- und Lesevorgänge von einer in FIG 5 dargestellten Puffersteuereinrichtung PS her, die mit dem Durchlaufspeicher über die Leitungen WR1, RD und FE verbunden ist. Die Leitungen WR1 und RD dienen dabei für die Übertragung von Schreibimpulsen bzw. Leseimpulsen. Über die Leitung FE gibt der Durchlaufspeicher ein seinen Leerzustand anzeigendes Steuersignal ab.

Mit seinen Datensignalausgängen ist der Durchlaufspeicher FIFO1 mit Datensignaleingängen eines Registers Reg5 verbunden. Dieses Register, das ausgangsseitig an die in FIG 2 mit SD bezeichnete Leitungsanordnung angeschlossen ist, ist mit einem Takteingang über die bereits erwähnte Leitung RD und mit einem für die Freigabe seiner Datensignalausgänge dienenden Eingang über die Leitung EN1 der Puffersteuereinrichtung PS verbunden.

Außerdem weist die Sendepuffer-Anordnung SP zwei weitere Register Reg6 und Reg7 auf. Diese Register sind mit ihren Datensignalausgängen jeweils an die bereits erwähnte Leitung SD angeschlossen. Für die Freigabe dieser Datensignalausgänge weist jedes Register wiederum einen Steuereingang auf, welcher über eine Leitung EN2 bzw. EN3 von der Puffersteuereinrichtung PS her steuerbar ist. Das Register Reg6 dient dabei für die Bereitstellung der in einem Datensignalblock zu übertragenden Senderadresse und Endekennung.

Diese Informationen erhält dieses Register eingangsseitig über den Datenbus DB zugeführt. Die Übernahme von Senderadresse und Endekennung erfolgt mit Hilfe eines Schreibimpulses, welchen die Puffersteuereinrichtung über die Leitung WR2 abgibt. In dem Register Reg7 ist das bereits erwähnte vorbereitete Quittungssignal gespeichert.

Für die Steuerung von Schreibvorgängen in dem Durchlaufspeicher FIFO1 ist die Puffersteuereinrichtung PS mit dem Adressbus AB und der Leitung WR verbunden, über die Adressensignale bzw. Schreibimpulse übertragen werden.

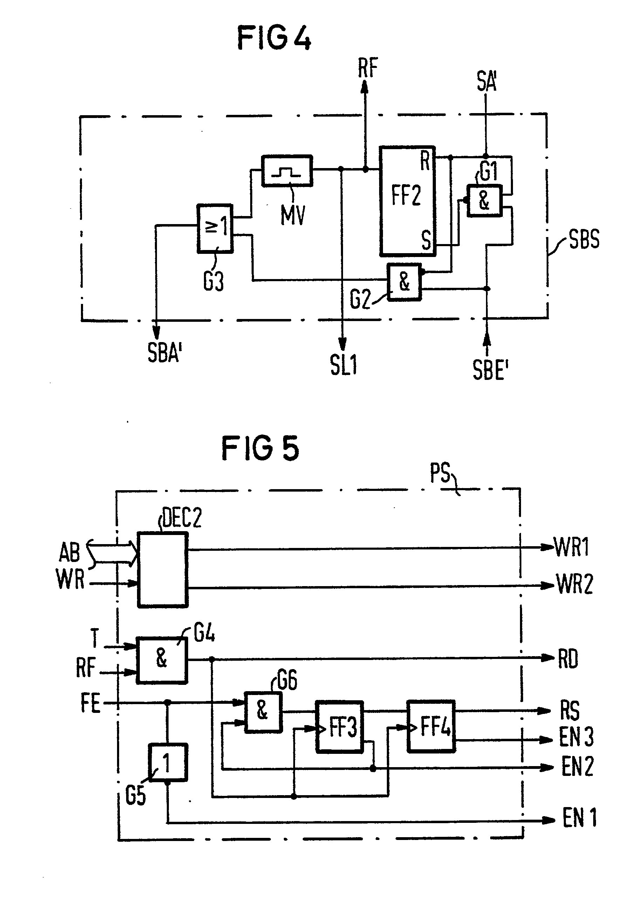

Für die Steuerung von Lesevorängen in dem Durchlaufspeicher und in den Registern Reg5, Reg6 und Reg7 ist die Puffersteuereinrichtung dagegen einerseits für die Übernahme von Taktimpulsen mit der bereits in FIG 2 dargestellten Leitung T und andererseits mit einer Leitung RF verbunden. Über diese Leitung erhält die Puffersteuereinrichtung PS von einer in FIG 4 näher dargestellten Einrichtung für den Empfang eines Sendeberechtigungssignals SBS ein Freigabesignal für das Auslesen eines in dem Durchlaufspeicher FIFO1 gespeicherten Datensignalblockes zugeführt. Diese Einrichtung SBS ist mit den in FIG 2 dargestellten Leitungen SBE', SL1 und SBA' verbunden. Außerdem ist sie über eine Leitung SA' an den Ausgang einer Kippstufe FF1 angeschlossen, die an ihrem Takteingang von dem Mikroprozessor MP her über die Leitung SA das bereits erwähnte Sendeanforderungssignal zugeführt erhält. Ein Rücksetzeingang dieser Kippstufe ist schließlich über die Leitung RS mit der Puffersteuereinrichtung PS verbunden. Im übrigen ist die Leitung SA' auch noch an den Steuerbus SB angeschlossen.

In der in FIG 3 dargestellten Sendepufferanordnung SP laufen folgende Steuerungsvorgänge ab. Für die wortweise Übernahme eines Datensignalblockes in den Durchlaufspeicher FIFO1 werden von dem Mikroprozessor MP her Schreibimpulse in Verbindung mit den Durchlaufspeicher bezeichnenden Adressensignalen an die Puffersteuereinrichtung PS abgegeben. Diese leitet die Schreibimpulse dann an den Durchlaufspeicher weiter. Der mit Hilfe dieser Schreibimpulse wortweise übernommene Datensignalblock bleibt zunächst im Durchlaufspeicher gespeichert. Nach dieser Übernahme des Datensignalblockes gibt schließlich der Mikroprozessor noch über die Leitung SA ein Sendeanforderungssignal ab, welches die Kippstufe FF1 in den aktiven Zustand überführt.

Durch diesen aktiven Zustand der Kippstufe FF1 wird der Einrichtung für den Empfang eines Sendeberechtigungssignals SBS das Vorliegen eines zu übertragenden Datensignalblockes angezeigt. Empfängt nun anschließend diese Einrichtung ein Sendeberechtigungssignal so gibt sie ein diesem entsprechendes Signal über die Leitung RF an die Puffersteuereinrichtung PS ab, die daraufhin den Durchlaufspeicher FIFO1 und das Register Reg5 mit im Taktraster der Taktimpulse T auftretenden Leseimpulsen beaufschlagt. Außerdem gibt die Puffersteuereinrichtung noch ein Freigabesignal für die Datensignalausgänge des Registers Reg5 ab. Damit wird der gerade in dem Durchlaufspeicher FIFO1 gespeicherte Datensignalblock wortweise ausgelesen und über das Register Reg5 und die Datenweiche DW1 an die Ringleitungsanordnung weitergeleitet. Die Datenweiche wird dafür von der Einrichtung SBS entsprechend gesteuert.

Das gerade erwähnte Auslesen erfolgt nun so lange, bis auf das Auslesen des letzten zu dem Datensignalblock gehörenden Datensignals hin von dem Durchlaufspeicher FIFO1 ein dessen Leerzustand anzeigendes Signal über die Leitung FE an die Puffersteuereinrichtung PS abgegeben wird. Dieses Signal bewirkt, daß von der Puffersteuereinrichtung her die Datensignalausgänge des Registers Reg 5 gesperrt und daraufhin zunächst die Datensignalausgänge des Registers Reg6 und anschließend die Datensignalausgänge des Registers Reg7 für jeweils einen Taktimpuls T freigegeben werden. Damit werden, wie bereits oben erwähnt, dem gerade übertragenen Datensignalblock noch die Senderadresse einschließlich der Endekennung und das vorbereitete Quittungssignal angefügt. Nach der Abgabe des Quittungssignals wird von der Puffersteuereinrichtung PS her die kippstufe FF1 in ihren inaktiven Zustand zurückgesetzt. Dieses Rücksetzen bewirkt, daß das von der Einrichtung SBS empfangene Sendeberechtigungssignal über die Leitung SBA' an die Ringleitungsanordnung weitergeleitet und ein dieses Weiterleiten anzeigendes Steuersignal an den Mikroprozessor MP über die Leitung SA' abgegeben wird.

In FIG 4 ist der Aufbau der Einrichtung für den Empfang eines Sendeberechtigungssignals SBS dargestellt. Diese Einrichtung weist eine sogenannte RS-Kippstufe FF2 auf, deren Setzeingang S mit einem ein Ausgangssignal negierenden Ausgang eines UND-Gliedes G1 verbunden ist. Dieses UND-Glied ist mit einem Eingang an die das Sendeberechtigungssignal führende Leitung SBE' und mit einem weiteren Eingang an die Leitung SA' angeschlossen, wobei letztere auch an den Rücksetzeingang der Kippstufe FF2 herangeführt ist. Beide Leitungen sing außerdem mit Eingängen eines UND-Gliedes G2 verbunden, wobei der mit der Leitung SA' verbundene Eingang das ihm zugeführte Eingangssignal negiert. Ausgangsseitig ist dieses UND-Glied an einen Eingang eines ODER-Gliedes G3 angeschlossen. Ein weiterer Eingang dieses ODER-Gliedes steht mit dem Ausgang einer monostabilen Kippstufe MV in Verbindung, die ihrerseits eingangsseitig mit dem Ausgang der bereits erwähnten RS-Kippstufe FF2 verbunden ist. An diesem Ausgang sind außerdem die Leitungen SL1 und RF (FIG 3) angeschlossen.

Die in FIG 4 gezeigte Anordnung leitet immer dann sofort ein auf der Leitung SBE' auftretendes Sendeberechtigungssignal über das UND-Glied G2 und das ODER-Glied G3 an das in Fig.2 dargestellte Ausgangsregister Reg4 weiter, wenn die Kippstufe FF1 sich im inaktiven Zustand befindet, d.h. wenn von dem Mikroprozessor kein Sendeanforderungssignal zuvor abgegeben worden ist. Befindet sich die Kippstufe FF1 dagegen im aktiven Zustand, so ist der gerade agegebene Übertragungsweg für das Sendeberechtigungssignal gesperrt. Bei Eintreffen eines Sendeberechtigungssignals wird die Kippstufe FF2 in ihren aktiven Zustand überführt, in welchem auf der Leitung RF das bereits erwähnte Freigabesignal für das Auslesen eines in dem Durchlaufspeicher FIFO1 gespeicherten Datensignalblockes auftritt. Außerdem wird in diesem Zustand über die Leitung SL1 ein Steuersignal an die Datenweiche DW1 (FIG.2) abgegeben.

Das Rücksetzen der Kippstufe FF1 in den inaktiven Zustand nach der Übertragung eines Datensignalblockes bewirkt, daß auch die Kippstufe FF2 in ihren inaktiven Zustand überführt wird. Bei diesem Übergang gibt die der Kippstufe FF2 nachgeschaltete monostabile Kippstufe MV ein Ausgangssignal vorgegebener Dauer ab, welches als Sendeberechtigungssignal über das ODER-Glied weitergeleitet wird.

In FIG 5 ist der Aufbau der Puffersteuereinrichtung PS dargestellt. Die Puffersteuereinrichtung weist danach einen Decodierer DEC2 auf, der eingangsseitig mit dem Adreßbus AB und der Leitung WR verbunden ist. Je nach den auf dem Adreßbus anstehenden Adreßsignalen leitet der Decodierer die auf der Leitung WR übertragenen Schreibimpulse entweder an die Leitung WR1 oder an die Leitung WR2 weiter.

Die Puffersteuereinrichtung PS weist außerdem ein UND-Glied G4 auf, welches bei Vorliegen des bereits erwähnten Freigabesignals auf der Leitung RF Taktimpulse T als Leseimpulse an die Leitung RD abgibt. Der Ausgang dieses UND-Gliedes ist außerdem mit Takteingängen zweier hintereinander geschalteter Kippstufen FF3 und FF4 verbunden. Der nichtnegierende Ausgang der Kippstufe FF3 ist dabei direkt an den Datensignaleingang der Kippstufe FF4 angeschlossen. Der datensignaleingang der Kippstufe FF3 steht mit dem Ausgang eines UND-Gliedes G6 in Verbindung. Eingangsseitig ist dieses UND-Glied einerseits an die in Fig.3 dargestellte Leitung FE und andererseits an den das Ausgangssignal negierenden Ausgang der Kippstufe FF3 angeschlossen. Mit diesem Ausgang ist außerdem die Leitung EN2 verbunden. Die Kippstufe FF4 steht mit ihrem das Ausgangssignal nicht negierenden Ausgang mit der Leitung RS und mit ihrem das Ausgangssignal negierenden Ausgang mit der Leitung EN3 in Verbindung. An die gerade erwähnte Leitung FE ist schließlich noch ein ausgangsseitig mit der Leitung EN1 verbundener Inverter G5 angeschlossen.

Die gerade erläuterte, aus dem UND-Glied G6, den beiden Kippstufen FF3 und FF4 und dem Inverter G5 bestehende Schaltungsanordnung gibt bei Auftreten eines den Leer-Zustand des Durchlaufspeichers FIFO1 anzeigenden Signals zunächst ein Sperrsignal für das Sperren der Datensignalausgänge des Registers Reg5 und anschließend jeweils ein Freigabesignal für die Datensignalausgänge der Register Reg6 und Reg7 ab. Außerdem wird von der Kippstufe FF4 auch noch ein das Rücksetzen der Kippstufe FF1 bewirkendes Signal bereitgestellt.

In Fig.6 ist der Aufbau der bereits erwähnten Empfangpuffer-Anordnung EP dargestellt. Diese Anordnung weist für den oben angegebenen Adressenvergleich eine mit den Datensignalausgängen des Eingangsregisters Reg1 (Fig.2) verbundene Vergleicheranordnung Vg1 auf, welche bei einer Übereinstimmung der miteinander verglichenen Adresse ein Setzsignal an eine Kippstufe FF5 abgibt. Diese Kippstufe steht ausgangsseitig mit einem Eingang eines UND-Gliedes G7 in Verbindung. An einem weiteren Eingang erhält dieses UND-Glied als Schreibimpulse die Taktimpulse T zugeführt. Am Ausgang dieses UND-Gliedes G7 ist ein Schreibimpuls-Eingang eines Speichers FIFO2 angeschlossen. Bei diesem Speicher handelt es sich beispielsweise um einen Durchlaufspeicher, der mit seinen Datensignalausgängen mit dem Datenbus DB verbunden ist. In diesen Durchlaufspeicher wird bei Vorliegen eines gerade erwähnten Setzsignals der Datensignalblock wortweise übernommen, und zwar mit Hilfe der über das UND-Glied G7 übertragenen Taktimpulse T. Die Übernahme von Datensignalwörtern erfolgt dabei so lange, bis die Kippstufe FF5 durch Auftreten der das Ende des Datensignalblockes anzeigenden Endekennung in ihren inaktiven Zustand zurückgesetzt wird. Für dieses Rücksetzen ist die Kippstufe FF5 am Eingang des Durchlaufspeichers mit der die Endekennung führenden Leitung EK verbunden. Diese Leitung ist außerdem an eine weitere Kippstufe FF6 angeschlossen, die auf das Auftreten der Endekennung hin an ihrem Ausgang das bereits erwähnte, dem Mikroprozessor MP das Bereitstehen eines Datensignalblockes anzeigende Steuersignal abgibt. Auf das Auslesen eines Datensignalblockes aus dem Durchlaufspeicher FIFO2 wird hier nicht näher eingegangen. Dieses Auslesen erfolgt in bekannter Weise durch Zuführen von entsprechenden Steuersignalen über Leitungen des Steuerbusses SB. Das Auslesen wird dabei mit dem Auftreten eines den Leerzustand des Durchlaufspeichers anzeigenden Signals beendet. Dieses Signal erhält der Mikroprozessor MP von dem Durchlaufspeicher FIFO2 her zugeführt, beispielsweise in Form eines Steuersignals über den Steuerbus SB oder als Unterbrechungssignal an einem Unterbrechungseingang.

Der Eingang des Durchlaufspeichers FIFO2 ist mit einer Einrichtung SB für die Überprüfung empfangener Datensignalblöcke verbunden. Diese Einrichtung überprüft empfangene Datensignalblöcke hinsichtlich ihrer fehlerfreien Übertragung, beispielsweise in Form einer Paritätsprüfung. Sie modifiziert dabei das in einem empfangenen Datensignalblock enthaltene, vom Sender vorbereitete Quittungssignal entsprechend dem Überprüfungsergebnis und gibt anschließend dieses modifizierte Quittungssignal dann zusammen mit der den Sender des gerade empfangenen Datensignalblockes bezeichnenden Adresse und der Endekennung an das Register Reg3 ab.

Dem Durchlaufspeicher FIFO2 ist schließlich noch eine Datenweiche DW2 vorgeschaltet. Diese Datenweiche wird von der bereits genannten Vergleicheranordnung Vg1 her gesteuert. Sie leitet nur dann zu einem Datensignalblock gehörende Datensignalwörter an den Durchlaufspeicher weiter, wenn die Vergleicheranordnung eine Übereinstimmung der miteinander verglichenen Adressen festgestellt hat. Anderenfalls wird der gesamte empfangene Datensignalblock über die in FIG 2 dargestellte Datenweiche DW1 und das Ausgangsregister Reg4 an die zugehörige Ringleitungsanordnung weitergeleitet.

Vorstehend wurde anhand der Figuren 2 und 6 erläutert, daß für den Empfang von Quittungssignalen und Datensignalblöcken in den Steuereinrichtungen jeweils zwei gesonderte Adressendecodierer, nämlich der Adressendecodierer DEC und die Vergleicheranordnung Vg1, vorgesehen sind. Anstelle dieser beiden Adressendecodierer kann jedoch auch ein einziger Adressendecodierer verwendet werden, welcher für die Erkennung von Quittungssignalen und Datensignalblöcken außer den die Adressen führenden Leitungen noch die Anfangskennung und Endekennung führenden Leitungen zugeführt erhält.

## Bezugszeichenliste

| | |
|---|---|
| AB | Adreßbus |
| DB | Datenbus |
| DEC, DEC2 | Adressendecodierer |
| DW1, DW2 | Datenweiche |
| EN1, EN2, EN3 | Leitung |
| EK | Leitung |
| EP | Empfangspuffer-Anordnung |
| FE | Leitung |
| FF1,...,FF6 | Kippstufe |
| FIFO1, FIFO2 | Durchlaufspeicher |
| G0, G3 | ODER-Glied |
| G1, G2, G4, G6, G7 | UND-Glied |
| G5 | Inverter |
| INTn-1, INTn | Unterbrechungseingang des Mikroprozessors MP |
| LT0,...LTm | Leitungsanschluß |
| MEM | Speicheranordnung |
| MP | Mikroprozessor |
| MV | Monostabile Kippstufe |
| PS | Puffersteuereinrichtung |
| QS | Leitungsanordnung |
| RA | Schnittstellenschaltung |
| RD | Leitung |
| Reg1 | Eingangsregister |
| Reg2 | Quittungsregister |
| Reg3, Reg5, Reg6, Reg7 | Register |
| Reg4 | Ausgangsregister |
| RF | Leitung |
| RING0, RING1 | Ringleitungsanordnung |
| RS | Leitung |
| S | Setzeingang der Kippstufe FF2 |
| SA, SA' | Leitung des Steuerbusses SB |
| SB | Steuerbus |
| SBA' | Leitung |
| SBE' | Leitung |
| SBS | Einrichtung für den Empfang eines Sendeberechtigungssignals |
| SD | Leitungsanordnung |
| SL1, SL2 | Leitung |
| SP | Sendepuffer-Anordnung |
| SUo,...,SUn | Vermittlungseinheit |
| T | Taktleitung |
| TUo,...,TUk | Leitungsanschlußeinheit |
| Vgl | Vergleicheranordnung |
| WR | Leitung des Steuerbusses SB |
| WR1,...WR2 | Leitung |

## Patentansprüche

1. Verfahren zum Übertragen von Datensignalen zwischen über ein taktgesteuertes, richtungsabhängig betriebenes Ringleitungssystem (RING0, RING1) miteinander verbundenen Steuereinrichtungen (SUo, RA;... SUn, RA; TUo, RA;...TUk, RA), die insbesondere durch Steuereinrichtungen eines Datenvermittlungssystems gebildet sind, wobei über das Ringleitungssystem von Steuereinrichtung zu Steuereinrichtung ein diese jeweils in einen Sendeberechtigungszustand steuerndes Sendeberechtigungssignal übertragen wird, vor dessen Weitergabe von der jeweiligen Steuereinrichtung von dieser zu sendende Datensignale zusammen mit einer eine gewünschte Steuereinrichtung bezeichnenden Empfängeradresse an das Ringleitungssystem abgegeben werden, und wobei von einer Steuereinrichtung, die durch die zusammen mit den Datensignalen übertragene Empfängeradresse bezeichnet ist, diese Datensignale zur weiteren Bearbeitung übernommen werden und ein über das Ringleitungssystem weiterzuleitendes Quittungssignal abgegeben wird, welches für diejenige in einem Quittungsempfangszustand sich befindende Steuereinrichtung vorgesehen ist, von der die Datensignale abgegeben worden sind,
**dadurch gekennzeichnet, daß**
die maximale Zeitspanne, während der eine Steuereinrichtung nach der Abgabe von Datensignalen sich im Quittungsempfangszustand befindet, durch den Zeitpunkt des erneuten Eintreffens eines Sendeberechtigungssignals bei der betreffenden Steuereinrichtung festgelegt wird, daß bei Eintreffen des für die betreffende Steuereinrichtung in Frage kommenden Quittungssignals innerhalb der genannten maximalen Zeitspanne von der betreffenden Steuereinrichtung ein eine erneute Abgabe von Datensignalen ermöglichender Zustand eingenommen wird
und daß bei Ablauf der maximalen Zeitspanne vor Eintreffen des für die betreffende Steuereinrichtung in Frage kommenden Quittungssignals diese Steuereinrichtung in einen Fehlermelde- und/oder Fehlerbehandlungszustand überführt wird.

2. Schaltungsanordnung zur Durchführung des Verfahrens nach Anspruch 1 mit über ein taktgesteuertes, richtungsabhängig betriebenes Ringleitungssystem (RING0, RING1) miteinander verbundenen Steuereinrichtungen (SUo, RA;...TUk, RA), welche jeweils als Sendeeinrichtungen nach Empfang eines Sendeberechtigungssignals gegebenenfalls zu übertragende Datensignale an das Ringleitungssystem abgeben und welche jeweils als Empfangseinrichtungen für sie bestimmte, über das Ringleitungssystem übertragene Datensignale aufnehmen und ein diesen entsprechendes Quittungssignal für die in Frage kommende Sendeeinrichtung an das Ringleitungssystem abgeben,
**dadurch gekennzeichnet,**
daß jede der Steuereinrichtungen (SUo, RA;...TUk, RA) eine Sendeablaufsteuerung (MP, SP) aufweist, welche die zugehörige Steuereinrichtung nach Abgabe von Datensignalen zunächst in den Quittungsempfangszustand und aus diesem auf ein erneutes Eintreffen eines Sendeberechtigungssignals hin vor dem Eintreffen des erwarteten Quittungssignals in ein Fehlermelde- und/oder Fehlerbehandlungszustand überführt
und daß in jeder der Steuereinrichtungen ein Quittungssignalempfänger (DEC, Reg2) vorgesehen ist, welcher auf das Eintreffen eines Quittungssignals hin ein Quittungsbestätigungssignal an die zugehörige Sendeablaufsteuerung abgibt, aufgrund dessen diese Sendeablaufsteuerung die zugehörige, in einem Quittungsempfangszustand sich befindende Steuereinrichtung in einen eine erneute Abgabe von Datensignalen ermöglichenden Zustand überführt.

3. Schaltungsanordnung nach Anspruch 2,
**dadurch gekennzeichnet,**
daß die Sendeablaufsteuerung eine mit einer Mehrzahl von Unterbrechungs-Steuereingängen (INT1 bis INTn) versehene Mikroprozessoranordnung (MP, MEM) aufweist, daß mit einem ersten der Unterbrechungs-Steuereingänge (INTn) eine Anordnung (SBS) für den Empfang von Sendeberechtigungssignalen verbunden ist, welche bei Auftreten eines Sendeberechtigungssignals ein diesem entsprechendes Steuersignal an den betreffenden Unterbrechungs-Steuereingang abgibt,
und daß an einem weiteren Unterbrechungs-Steuereingang (INTn - 1) der bereits genannte Quittungssignalempfänger (DEC, Reg2) für die Abgabe eines Quittungsbestätigungssignals angeschlossen ist.

4. Schaltungsanordnung nach Anspruch 2 oder 3,
**dadurch gekennzeichnet,**
daß als Quittungssignalempfänger eine Decodiereinrichtung (DEC) und ein mit der Mikroprozessoranordnung (MP, MEM) verbundenes Register (Reg2) vorgesehen ist, welches bei Auftreten eines für die jeweilige Steuereinrichtung bestimmten Quittungssignals dieses für eine Auswertung durch die Mikroprozessoranordnung aufnimmt und auf diese Aufnahme hin ein Quittungsbestätigungssignal an einem Steuerausgang abgibt.

## Claims

1. Method for transmitting data signals between control devices (SUo, Ra;... SUn, RA; TUo, RA; TUK; RA) interconnected via a clock-controlled loop system (RING0, RING1) which is direction-dependently operated, which control devices are formed, in particular, by control devices of a data switching system, in which method a transmit authorization signal is transmitted via the loop system from control device to control device, which signal controls these devices in each case to assume a transmit authorization state, the respective control device emitting to the loop system data signals to be transmitted by it, together with a receiver address designating a desired control device, before forwarding the transmit authorization signal, and in which method a control device which is designated by the receiver address transmitted together with the data signals accepts these data signals for further processing and emits an acknowledgment signal, to be forwarded via the loop system, which is intended for that control device which is in an acknowledgment receiving state and from which the data signals have been emitted, characterized in that the maximum period during which a control device is in the acknowledgement receiving state after the emission of data signals is determined by the time of the renewed arrival of a transmit authorization signal at the relevant control device, that on arrival of the acknowledgement signal relating to the relevant control device within the said maximum period, a state enabling a renewed emission of data signals is assumed by the relevant control device, and that if the maximum period has elapsed before arrival of the acknowledgement signal relating to the relevant control device, this control device is switched to an error signalling and/or error processing state.

2. Circuit arrangement for carrying out the method according to Claim 1, comprising control devices (SUo, RA;...TUk, RA) interconnected via a clock-controlled loop system (RING0, RING1) which is direction-dependently operated, which control devices in each case emit, as transmitting devices, to the loop system any data signals which may have to be transmitted after reception of a transmit authorization signal, and which control devices in each case accept, as receiving devices, data signals intended for them and transmitted via the loop system, and emit to the loop system an acknowledgement signal corresponding to these data signals for the relevant transmitting device, characterized in that each of the control devices (SUo, RA;...TUk, RA) exhibits a transmitting sequence control (MP, SP) which switches the associated control device, after emission of data signals, first into the acknowledgement receiving state and, following a renewed arrival of a transmit authorization signal before the arrival of the expected acknowledgement signal, from this into an error signal and/or error processing state, and that in each of the control devices an acknowledgement signal receiver (DEC, Reg 2) is provided which, following the arrival of an acknowledgement signal, emits an acknowledgement confirmation signal to the associated transmit sequence control, on the basis of which this transmit sequence control switches the associated control device, which is in an acknowledgement receiving state, into a state enabling a renewed emission of data signals.

3. Circuit arrangement according to Claim 2, characterized in that the transmit sequence control exhibits a microprocessor arrangement (MP, MEM) which is provided with a plurality of interrupt control inputs (INT1 to INTn), that a first one of the interrupt control inputs (INTn) is connected to an arrangement (SBS) for receiving transmit authorization signals, which, on the occurrence of a transmit authorization signal, emits a corresponding control signal to the relevant interrupt control input, and that a further interrupt control input (INTn - 1) is connected to the previously mentioned acknowledgement signal receiver (DEC, Reg2) for emitting an acknowledgement confirmation signal.

4. Circuit arrangement according to Claim 2 or 3, characterized in that a decoding device (DEC) and a register (Reg2), which is connected to the microprocessor arrangement (MP, MEM), is provided as acknowledgement signal receiver which, on occurrence of an acknowledgement signal intended for the respective control device, accepts this signal for an evaluation by the microprocessor arrangement and, following this acceptance, emits an acknowledgment confirmation signal at a control output.

**Revendications**

1. Procédé pour transmettre des signaux de données entre des dispositif de commande (SUo, RA;...SUn, RA; TUo, RA;...TUk, RA), qui sont reliés entre eux par l'intermédiaire d'un système de lignes en anneau (RING0, RING1) commandé de façon cadencée et opérant en fonction du sens de transmission et qui sont formés notamment par des dispositifs de commande d'un système de commutation de données, et selon lequel le système de lignes en anneau transmet d'un dispositif de commande à un autre dispositif de commande un signal d'autorisation d'émission, qui place le dispositif de commande respectivement dans son état autorisé à émettre et, avant la retransmission de ce signal par le dispositif de commande respectif, des signaux de données devant être émis par le dispositif sont envoyés, conjointement avec une adresse de récepteur désignant un dispositif de commande désiré, au système de lignes en anneau, et selon lequel un dispositif de commande, qui est désigné par l'adresse de récepteur transmise conjointement avec des signaux de données, prend en charge ces signaux de données pour leur traitement ultérieur, et un signal d'accusé de réception, qui doit être retransmis par l'intermédiaire du système de lignes en anneau et qui est prévu pour le dispositif de commande, qui est situé dans un état de réception d'accusé de réception et qui a délivré les signaux de données, est délivré, caractérisé par le fait que l'intervalle de temps maximum, pendant lequel un dispositif de commande est situé dans l'état de réception d'un accusé de réception après la délivrance de signaux de données, est déterminé par l'instant de la nouvelle apparition d'un signal d'autorisation d'émission dans le dispositif de commande considéré, que, lors de l'apparition du signal d'accusé de réception intervenant pour le dispositif de commande considéré, pendant ledit intervalle de temps maximum, le dispositif de commande considéré prend un état permettant une nouvelle délivrance de signaux de données, et qu'à la fin de l'intervalle de temps maximum, avant l'apparition du signal d'accusé de réception concernant le dispositif de commande considéré, ce dernier passe à un état de traitement de signalisation et/ou de traitement d'erreurs.

2. Montage pour la mise en œuvre du procédé suivant la revendication 1, comportant des dispositifs de commande (SUo, RA;...TUk, RA) qui sont reliés entre eux par l'intermédiaire d'un système de lignes en anneau (RING0, RING1) commandé de façon cadencée et fonctionnant en fonction du sens de transmission et qui, respectivement, en tant que dispositifs d'émission, délivrent des signaux de données pouvant être éventuellement transmis au système de lignes en anneau, après la réception d'un signal d'autorisation d'émission et, respectivement en tant que dispositifs de réception, reçoivent des signaux de données qui leur sont destinés et sont transmis par l'intermédiaire du système de lignes en anneau, et envoient au système de lignes en anneau un signal d'accusé de réception, qui correspond à ces signaux, pour le dispositif d'émission considéré, caractérisé par le fait que chaque des dispositifs de commande (SUo, RA;...TUk, RA) comporte un dispositif (MP, SP) de commande du déroulement de l'émission, qui, après la délivrance de signaux de données, place tout d'abord le dispositif de commande associé dans l'état de réception de l'accusé de réception et, lors d'une nouvelle apparition d'un signal d'autorisation d'émission avant l'arrivée du signal d'accusé de réception attendu, fait passer ce dispositif de commande dans un état de signalisation et/ou de traitement d'erreurs et qu'il est prévu, dans chacun des dispositifs de commande, un récepteur (DEC, Reg2) du signal d'accusé de réception, qui, lors de l'apparition d'un signal d'accusé de réception, envoie au dispositif associé de commande de déroulement de l'émission, un signal de confirmation d'accusé de réception, sur la base duquel ce dispositif de commande de déroulement de l'émission fait passer le dispositif associé de commande, qui est situé dans un état de réception de l'accusé de réception, dans un état permettant une nouvelle délivrance de signaux de donnés.

3. Montage suivant la revendication 2, caractérisé par le fait que le dispositif de commande de déroulement de l'émission comporte un dispositif à microprocesseurs (MP, MEM) qui comporte une multiplicité d'entrées de commande d'interruption (INT1 à INTn), qu'une première des entrées de commande d'interruption (INTn) est reliée à un dispositif (SBS), qui est prévu pour la réception de signaux d'autorisation d'émission et qui, lors de l'apparition d'un signal d'autorisation d'émission, envoie un signal de commande correspondant à ce signal, à l'entrée de commande d'interruption considérée, et que le récepteur de signaux d'accusé de réception (DEC, Reg2), déjà mentionné, est raccordé à une autre entrée de commande d'interruption (INTn-1) pour la délivrance d'un signal de confirmation d'accusé de réception.

4. Montage suivant les revendications 2 ou 3, caractérisé par le fait qu'il est prévu, comme récepteur des signaux d'accusé de réception, un dispositif de décodage (DEC) et un registre (Reg2), qui est relié au dispositif à microprocesseur (MP, MM) et qui, lors de l'apparition d'un signal d'accusé de réception destiné au dispositif de commande respectif, reçoit ce signal pour une évalution par le dispositif à microprocesseur et, à la suite de cette réception, envoie un signal de confirmation d'accusé de réception à une sortie de commande.

FIG1

FIG 2

# FIG 3

# FIG 4

RF

SA'

≥1 G3

MV

FF2
R
S

G1
&

G2
&

SBS

SBA'

SL1

SBE'

# FIG 5

PS

DEC2

AB
WR

WR1

WR2

T
RF

G4
&

RD

FE

G6
&

FF3

FF4

RS

EN 3

1

G5

EN 2

EN 1

# FIG 6